# EUROPÄISCHE PATENTSCHRIFT

(11) **EP 0 934 846 B1**
(45) Veröffentlichungstag und Bekanntmachung des Hinweises auf die Patenterteilung: **09.11.2005**
(21) Anmeldenummer: 99101515.7
(22) Anmeldetag: 28.01.1999
(51) Int. Cl.: B60K 31/00, G08G 1/16

(54) **Verfahren zur automatischen Abstandsregelung von Kraftfahrzeugen**
Method for automatic control of vehicle spacing
Procédé pour la régulation automatique de la distance entre véhicules

(30) Priorität: 07.02.1998 DE 19804944
(43) Veröffentlichungstag der Anmeldung: 11.08.1999
(73) Patentinhaber: Volkswagen Aktiengesellschaft, 38436 Wolfsburg (DE)
(72) Erfinder: Andreas, Peter, Dipl.-Ing., 38518 Gifhorn (DE); Bäker, Wolfgang, 38114 Braunschweig (DE); Ruchatz, Thomas, Dipl.-Ing., 38165 Lehre (DE)

(56) Entgegenhaltungen:
- EP-A- 0 605 104
- EP-A- 0 657 857

## Beschreibung

Die Erfindung betrifft ein Verfahren zur automatische Abstandsregelung von Kraftfahrzeugen gemäß dem Oberbegriff des Patentanspruchs 1.

Zur Erhöhung der Sicherheit für Fahrzeug und Lenker im heutigen Straßenverkehr wird neben dem Einsatz von fahrzeugübergreifenden Verkehrsleitsystemen zunehmend versucht, den Fahrer bei Routinetätigkeiten sowie in außergewöhnlichen Fahrsituationen mit Hilfe von Systemen zu unterstützen, die automatisch in die Steuerung des Fahrzeuges oder einzelner Fahrzeugkomponenten eingreifen. Ein erster Schritt hierzu war der Einsatz von Antiblockiersystemen (ABS) und Antriebsschlupfregelungen (ASR) zur Erhöhung der Stabilität des Fahrzeuges in längsdynamisch kritischen Situationen, d.h. bei Brems- und Beschleunigungsvorgängen. Des weiteren finden sogenannte Fahrzeugdynamikregelungen (FDR) bzw. Fahrstabilisierungsregelungen (FSR) zur Erhöhung der Fahrstabilität in querdynamisch kritischen Situationen Verwendung, also insbesondere in Fahrsituationen, die durch einen Lenkradeinschlag des Fahrers hervorgerufen und beeinflußt werden. FDR wertet Sensorinformationen aus, die an einzelnen Komponenten oder dem Gesamtfahrzeug durch geeignete Sensoren abgenommen werden und korrelieren diese anhand spezieller Auswertealgorithmen. Hierdurch wird es möglich, querdynamisch kritische Situationen zu erkennen und durch gezielte Beeinflussung einzelner Parameter der Fahrzeugdynamik, z.B. Lenkradgeschwindigkeit und Beschleunigung, das Fahrzeug positiv in Bezug auf die querdynamisch kritische Situation zu beeinflussen.

Des weiteren wurden Vorichtungen zur automatischen Abstandsregelung (ADR) entwickelt, mittels derer das Kraftfahrzeug automatisch einen einzuhaltenden Sicherheitsabstand zu einem vorausfahrenden Kraftfahrzeug einhält. Eine derartige Vorrichtung ist beispielsweise aus der EP 0 605 104 bekannt, die eine Abstandssensorik, eine Auswerteeinheit und eine von der Auswerteeinheit ansteuerbare, geschwindigkeitsbeeinflussende Stelleinrichtung umfaßt. Die Abstandssensorik ist dabei beispielsweise als Radar-, Lidar- oder Ultraschall-Sensor ausgebildet und tastet den vorderen Verkehrsraum nach Objekten ab. Der Abtastwinkel der Abstandssensorik wird dabei derart gewählt, daß auch Objekte auf benachbarten Fahrspuren erfaßt werden. Beispielsweise kann aus der Laufzeit der von den Objekten reflektierten Signalen dann auf den Abstand zurückgeschlossen werden. Die von der Abstandssensorik erfaßten Daten werden an die Auswerteeinheit übergeben. Der Auswerteeinheit wird darüber hinaus noch die eigene Geschwindigkeit des Kraftfahrzeuges zugeführt, so daß über eine Differenzbildung auf die Geschwindigkeit des vorausfahrenden Kraftfahrzeuges zurückgeschlossen werden kann. Da der einzubehaltende Sicherheitsabstand geschwindigkeitsabhängig ist, wird vorzugsweise mit einer geschwindigkeitsabhängigen Folgezeit t_{f} gerechnet. Weist das eigene Kraftfahrzeug eine höhere Geschwindigkeit als das vorausfahrende Kraftfahrzeug auf, so verringert sich die Folgezeit t_{f}. Verringert diese sich bis zu einem vorgebbaren Grenzwert, so erzeugt die Auswerteeinheit ein Stellsignal für eine die Geschwindigkeit beeinflussende Stelleinrichtung. Die Stelleinrichtung kann beispielsweise die Drosselklappe, das Einspritzventil oder die Bremse sein. Dieser Regelungsvorgang führt letztendlich dazu, daß das eigene Kraftfahrzeug sich mit der gleichen Geschwindigkeit wie das vorausfahrende Kraftfahrzeug bewegt. Die benachbarten Fahrspuren werden zunächst auf ihre Relevanz hin überprüft. Bewegen sich die Objekte nämlich in entgegengesetzter Richtung, so handelt es sich um eine Fahrspur des Gegenverkehrs und braucht nicht berücksichtigt zu werden. Die Unterscheidung, ob ein Objekt in derselben oder einer benachbarten Fahrspur sich befindet, erfolgt über eine definierte Fahrspurbreite. Des weiteren ermittelt die Auswerteeinheit aus den Daten der Abstandssensorik die Bewegungsrichtung von Objekten in benachbarten Fahrspuren. Bewegt sich ein Objekt von einer benachbarten Fahrspur in die definierte Fahrspurbreite, so bewertet die Auswerteeinheit dieses Fahrzeug als nächstliegendes Fahrzeug und regelt die Geschwindigkeit derart herunter, daß die Folgezeit t_{f} für dieses Fahrzeug eingehalten wird. Entsprechend wird bei Verlassen der definierten Fahrspurbreite durch das vorausfahrende Objekt die Geschwindigkeit solange erhöht, bis ein neues Objekt in der Fahrspur erfaßt wird, zu dem dann die konstante Folgezeit t_{f} eingehalten wird. Nachteilig an den bekannten Verfahren zur Abstandsregelung ist, daß insbesondere bei den Einschervorgängen teilweise sehr abrupt verzögert werden muß. Ein menschlicher Kraftfahrzeugführer hingegen fährt meist vorausschauend, d.h. dieser reagiert sehr frühzeitig auf einen solchen Einschervorgang und nimmt daher bereits frühzeitig die Geschwindigkeit zurück, so daß sich insgesamt eine kontinuierliche Verzögerung einstellt. Eine wesentliche Voraussetzung für die Akzeptanz von Fahrassistenz-Vorrichtungen ist jedoch, daß diese nicht zu einem gänzlich anderen Fahrverhalten führen.

Der Erfindung liegt daher das technische Problem zugrunde, ein Verfahren zur automatischen Abstandsregelung zu schaffen, das weitgehend dem Fahrverhalten eines menschlichen Kraftfahrzeugführers entspricht.

Die Lösung des technischen Problems ergibt sich durch die Merkmale des Patentanspruchs 1.

Durch die Veränderung der definierten Fahrspurbreite in Abhängigkeit von den Quergeschwindigkeiten der erfaßten Objekte in derselben und benachbarten Fahrspuren verhält sich das Verfahren zur automatischen Abstandsregelung wie ein vorausschauender Kraftfahrzeugführer, da früher eine Veränderung der Objekte in der Regelung berücksichtigt wird. Weitere vorteilhafte Ausgestaltungen der Erfindung ergeben sich aus den Unteransprüchen.

Bei Erfassung einer Quergeschwindigkeit des in derselben Fahrspur befindlichen Objektes wird die Fahrspurbreite verringert, da dies auf ein Ausscheren schließen läßt. Durch die Verringerung der definierten Fahrspurbreite wird das vorausfahrende Kraftfahrzeug für die Abstandsregelung früher die Fahrspur verlassen haben, so daß auch eher ein neues zu folgendes Objekt gesucht wird. Daher wird das Kraftfahrzeug auch früher beschleunigen und die Geschwindigkeit so lange erhöhen, bis ein neues Objekt in derselben Fahrspur durch die Abstandssensorik erfaßt wird oder die vom Fahrer gewählte Grenzgeschwindigkeit erreicht wird.

Entsprechend wird bei Ermittlung einer Quergeschwindigkeit eines in einer benachbarten Fahrspur befindlichen Objektes, auf die Fahrspur des Kraftfahrzeuges zu, auf einen Einschervorgang geschlossen und die definierte Fahrspurbreite vergrößert, falls das benachbarte Objekt näher als ein in derselben Fahrspur befindliches Objekt ist, wodurch das einscherende Objekt eher auf derselben Fahrspur befindlich gewertet wird und die Verzögerung entsprechend angepaßter vorgenommen werden kann.

In einer weiteren bevorzugten Ausführungsform wird die Anpassung der definierten Fahrspurbreite in Abhängigkeit von der Größe der Quergeschwindigkeit und/oder der Relativgeschwindigkeit zwischen dem eigenen Fahrzeug und den relevanten Objekten dynamisch adaptiv vorgenommen, so daß beispielsweise eine große Quergeschwindigkeit beim Ausscheren auch eine entsprechend große Verringerung der Fahrspurbreite zur Folge hat.

Die Erfindung wird nachfolgend anhand eines bevorzugten Ausführungsbeispiels näher erläutert. Die Fig. zeigen:

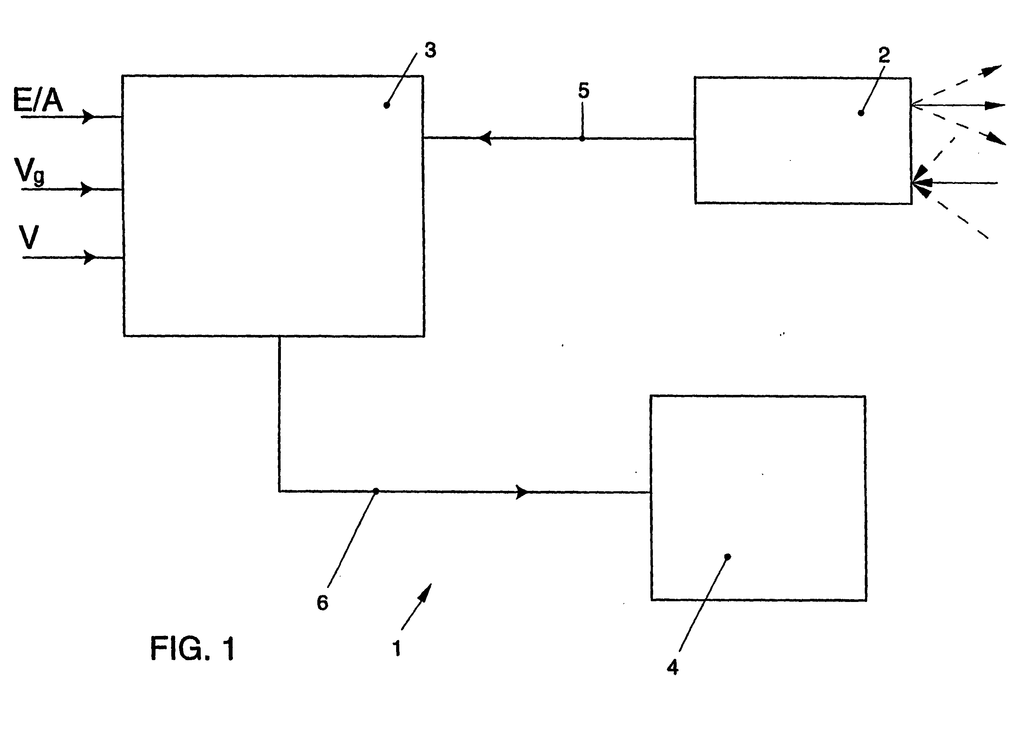

- Fig. 1: ein Blockschaltbild einer Vorrichtung zur automatischen Abstandsregelung von Kraftfahrzeugen und
- Fig. 2: eine beispielhafte Verkehrssituation.

Die Vorrichtung 1 zur automatischen Abstandsregelung von Kraftfahrzeugen umfaßt eine Abstandssensorik 2, eine Auswerteeinheit 3 und mindestens eine die Kraftfahrzeuggeschwindigkeit beeinflussende Stelleinrichtung 4. Die Abstandssensorik 2 ist über eine Datenleitung 5 mit der Auswerteeinheit 3 verbunden. Des weiteren wird der Auswerteeinheit 3 ein Ein-/Aussignal E/A, eine gewünschte Reisegeschwindigkeit V_{g} und die aktuelle Kraftfahrzeuggeschwindigkeit V zugeführt. Die Auswerteeinheit 3 ist über eine Steuerleitung 6 mit der Stelleinrichtung 4 verbunden.

Zum Aktivieren der Abstandsregelung gibt der Kraftfahrzeugführer ein Einsignal und eine gewünschte Reisegeschwindigkeit V_{g} in die Auswerteeinheit 3 ein. Über eine nicht dargestellte Steuerleitung aktiviert die Auswerteeinheit 3 die Abstandssensorik 2, beispielsweise indem ein Schalter zwischen Betriebsspannung und Abstandssensorik 2 geschlossen wird. Die Abstandssensorik 2 scannt darauf den vorderen Verkehrsraum in einem bestimmten Sichtfeld ab und empfängt von Objekten im Sichtfeld reflektierte Signale, die nach Laufzeit und Winkel erfaßt werden. Die erfaßten Signale werden über die Datenleitung 5 an die Auswerteeinheit 3 übertragen und ausgewertet. Dabei werden die erfaßten Objekte klassifiziert, ob diese sich in derselben Fahrspur oder in benachbarten Fahrspuren befinden. Dazu wird eine definierte Fahrspurbreite verwendet und mittels Laufzeit und Winkel auf die Position des Objektes geschlossen. Des weiteren kann mittels einer Differenzbildung auf die Relativgeschwindigkeiten der Objekte geschlossen werden. Ebenso kann aufgrund einer erfaßten Ortsbewegung auf die Quergeschwindigkeit der Objekte geschlossen werden.

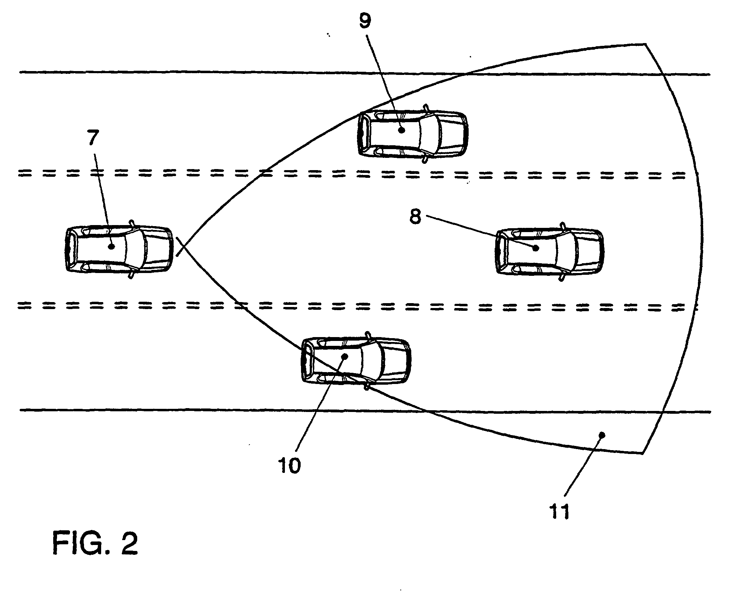

Anhand der in Fig. 2 dargestellten Verkehrssituation wird der Regelablauf detailliert beschrieben. Ein Kraftfahrzeug 7 mit einer Vorrichtung 1 zur automatischen Abstandsregelung bewegt sich in einer mittleren Fahrspur. In derselben Fahrspur befindet sich ein weiteres Kraftfahrzeug 8 und in den benachbarten Fahrspuren jeweils ein weiteres Kraftfahrzeug 9, 10. Die Abstandssensorik 2 scannt den vorderen Verkehrsraum mit einem bestimmten Sichtfeld 11 ab und erfaßt die dort befindlichen Kraftfahrzeuge 8-10. Zuerst sei angenommen, daß sich die Kraftfahrzeuge 9, 10 geradlinig in ihrer Fahrspur bewegen. Bewegt sich das Kraftfahrzeug 8 mit einer größeren Geschwindigkeit als die gewünschte Reisegeschwindigkeit V_{g}, so bewegt sich das Kraftfahrzeug 7 selbst mit der Geschwindigkeit V_{g,} und das Kraftfahrzeug 8 entfernt sich zunehmend. Fährt hingegen das Kraftfahrzeug 8 mit einer geringeren Geschwindigkeit als V_{g}, so nähert sich das Kraftfahrzeug 7 dem Kraftfahrzeug 8. Die Auswerteeinheit 3 ermittelt, daß sich das Kraftfahrzeug 8 innerhalb der definierten Spurbreite befindet. Die Fahrspurbreite ist beispielsweise eine Kraftfahrzeugbreite zur Mitte der Fahrspur. Unterscheidet der Abstand zwischen den Kraftfahrzeugen 7, 8 eine vorgebbare Folgezeit t_{f}, so erzeugt die Auswerteeinheit 3 ein Stellsignal für die Stelleinrichtung 4, so daß das Kraftfahrzeug 7 verzögert und unter Einhaltung der Folgezeit t_{f} dem Kraftfahrzeug 8 mit der gleichen Geschwindigkeit folgt. Registriert nun die Auswerteeinheit 3 eine Quergeschwindigkeit des Kraftfahrzeuges 8, so wird dies als Ausschervorgang gewertet und die definierte Fahrspurbreite verringert. Dies bewirkt, falls das Kraftfahrzeug 8 seine Bewegung in die linke oder rechte Fahrspur fortsetzt, daß die Auswerteeinheit 3 das Kraftfahrzeug 8 früher als innerhalb der linken oder rechten Fahrspur klassifiziert. Wird das Kraftfahrzeug 8 aber als innerhalb der rechten oder linken Fahrspur angesehen, so befindet sich kein Kraftfahrzeug mehr unmittelbar vor dem Kraftfahrzeug 7, und dieses beschleunigt bis zur Reisegeschwindigkeit V_{g} , falls nicht zwischenzeitlich ein neues Kraftfahrzeug in derselben Fahrspur erfaßt wird. Die Verringerung der definierten Fahrspurbreite wird daher auch zeitlich begrenzt, so daß nachdem das Kraftfahrzeug 8 aus der Fahrspur verschwunden ist, wieder mit der ursprünglichen Fahrspurbreite der Verkehrsraum abgesucht wird. Diese Anpassung der Fahrspurbreite kann einerseits diskret oder kontinuierlich dynamisch erfolgen.

Bewegt sich hingegen das Kraftfahrzeug 9 oder 10 auf die Fahrspur des Kraftfahrzeuges 7 zu, so wird die definierte Fahrspurbreite vergrößert, so daß bereits ein Teil der benachbarten Fahrspur mitumfaßt wird. Daher wird dieses Kraftfahrzeug 9, 10 bereits frühzeitig als in derselben Fahrspur befindlich klassifiziert und die Einhaltung der Folgezeit t_{f} überprüft. Bei Unterschreitung der Folgezeit t_{f} erzeugt die Auswerteeinheit 3 ein Stellsignal, so daß das Kraftfahrzeug 7 frühzeitig verzögert, noch bevor das Kraftfahrzeug 9 oder 10 sich tatsächlich in Fahrspur befindet.

Erfolgen die beiden zuvor beschriebenen Verkehrssituationen gleichzeitig, so wertet die Auswerteeinheit 3 den Abstand aus. Schert ein Kraftfahrzeug 9, 10 zwischen den Kraftfahrzeugen 7 und 8 ein, so wird die definierte Fahrspurbreite vergrößert. Schert es hingegen vor dem Kraftfahrzeug 8 ein, so wird die Fahrspurbreite verringert. Dabei können jedoch auch die Geschwindigkeiten der Kraftfahrzeuge berücksichtigt werden. Falls beispielsweise das Kraftfahrzeug 10 mit einer geringeren Geschwindigkeit als das Kraftfahrzeug 8 sich nach links vor das Kraftfahrzeug 8 setzt und dieses gleichzeitig auf die linke Fahrspur wechselt, so wird die Fahrspurbreite vergrößert oder beibehalten, da aufgrund der geringeren Geschwindigkeit von Kraftfahrzeug 10 das Kraftfahrzeug 7 verzögert werden muß. Schert das Kraftfahrzeug 10 hingegen mit einer größeren Geschwindigkeit ein, so kann die Fahrspurbreite kurzzeitig verkleinert werden.

## Patentansprüche

1. Verfahren zur automatischen Abstandsregelung von Kraftfahrzeugen, mittels einer Abstandssensorik, einer Auswerteeinheit und einer durch die Auswerteeinheit ansteuerbaren, die Geschwindigkeit V beeinflussenden Stelleinrichtung, umfassend folgende Verfahrensschritte:
a) Erfassen von im vorderen Verkehrsraum befindlichen Objekten durch die Abstandssensorik,
b) Ermitteln eines zu verfolgenden Objektes, das sich innerhalb einer definierten Fahrspurbreite des Kraftfahrzeuges befindet, durch die Auswerteeinheit und
c) Erzeugen eines Stellsignals durch die Auswerteeinheit für die Stelleinrichtung, so daß eine vorgebbare Folgezeit t_{f} eingehalten wird,
**dadurch gekennzeichnet, daß**
d) die Auswerteeinheit (3) aus den Daten der Abstandssensorik (2) für alle innerhalb und außerhalb der definierten Fahrspurbreite erfaßten Objekte (8, 9, 10) eine Quergeschwindigkeit zur Fahrspur des Kraftfahrzeuges (7) ermittelt und
e) in Abhängigkeit von den erfaßten Quergeschwindigkeiten die definierte Fahrspurbreite verändert wird.

2. Verfahren nach Anspruch 1, **dadurch gekennzeichnet, daß** bei Erfassung einer Quergeschwindigkeit des in derselben Fahrspur befindlichen Objektes (8) die Fahrspurbreite verringert wird.

3. Verfahren nach Anspruch 1 oder 2, **dadurch gekennzeichnet, daß** bei Erfassung einer Quergeschwindigkeit eines in einer benachbarten Fahrspur befindlichen Objektes (9, 10), auf die Fahrspur des Kraftfahrzeuges (7) zu, die Fahrspurbreite vergrößert wird, falls das bewachte Objekt (9, 10) näher als das in derselben Fahrspur befindliche Objekt (8) ist.

4. Verfahren nach einem der vorangegangenen Ansprüche, **dadurch gekennzeichnet, daß** die Veränderung der Spurbreite dynamisch adaptiv an die Größe der Quergeschwindigkeit und/oder der Relativgeschwindigkeit zwischen dem Kraftfahrzeug (7) und den relevanten Objekten (8; 9; 10) angepaßt wird.

## Claims

1. Method for the automatic distance control of motor vehicles by means of a distance sensor system, an evaluation unit and an actuating device which can be controlled by the evaluation unit and influences the speed V, comprising the following method steps:
a) the distance sensor system detecting objects in the traffic space ahead,
b) the evaluation unit determining an object which is to be tracked and is within a defined lane width of the motor vehicle, and
c) the evaluation unit generating an actuating signal for the actuating device, so that a predefinable tracking time t_{f} is maintained,
**characterized in that**
d) the evaluation unit (3) determines a lateral speed relative to the lane of the motor vehicle (7) from the data from the distance sensor system (2) for all of the objects (8, 9, 10) detected within and outside the defined lane width, and
e) the defined lane width is changed as a function of the detected lateral speeds.

2. Method according to Claim 1, **characterized in that** the lane width is reduced when a lateral speed of the object (8) in the same lane is being detected.

3. Method according to Claim 1 or 2, **characterized in that**, when the lateral speed of an object (9, 10) in an adjacent lane in the direction of the lane of the motor vehicle (7) is being detected, the lane width is increased if the object (9, 10) being observed is closer than the object (8) in the same lane.

4. Method according to one of the preceding claims, **characterized in that** the change in lane width is matched to the magnitude of the lateral speed and/or the relative speed between the motor vehicle (7) and the relevant objects (8; 9; 10) in a dynamically adaptive manner.

## Revendications

1. Procédé de régulation automatique de la distance entre des véhicules automobiles au moyen d'un détecteur de distance, d'une unité d'évaluation et d'un dispositif de réglage qui influence la vitesse V et qui peut être commandé par l'unité d'évaluation, comprenant les étapes suivantes :
a) détection par le détecteur de distance des objets qui se trouvent dans l'espace de circulation avant,
b) détermination par l'unité d'évaluation d'un objet suivi qui se trouve à l'intérieur d'une largeur de voie de circulation donnée du véhicule automobile et
c) génération d'un signal de commande par l'unité d'évaluation pour le dispositif de réglage de manière à maintenir un temps de suivi t_{f} pouvant être prédéfini,
**caractérisé en ce que**
d) l'unité d'évaluation (3) détermine une vitesse transversale par rapport à la voie de circulation du véhicule automobile (7) à partir des données du détecteur de distance (2) pour tous les objets (8, 9, 10) détectés à l'intérieur et à l'extérieur de la largeur définie de la voie de circulation et
e) la largeur définie de la voie de circulation est modifiée en fonction des vitesses détectées.

2. Procédé selon la revendication 1, **caractérisé en ce que** lors de la détection d'une vitesse transversale de l'objet (8) qui se trouve dans la même voie de circulation, la largeur de la voie de circulation est réduite.

3. Procédé selon la revendication 1 ou 2, **caractérisé en ce que** lors de la détection d'une vitesse transversale d'un objet (9, 10) qui se trouve dans la voie de circulation voisine en direction de la voie de circulation du véhicule automobile (7), la largeur de la voie de circulation est agrandie si l'objet (9, 10) surveillé est plus proche que l'objet (8) qui se trouve dans la même voie de circulation.

4. Procédé selon l'une des revendications précédentes, **caractérisé en ce que** la modification de la largeur de la voie est adaptée de manière dynamique en fonction de la valeur de la vitesse transversale et/ou de la vitesse relative entre le véhicule automobile (7) et les objets (8 ; 9 ; 10) concernés.
